# DEMANDE DE BREVET EUROPEEN

(11) **EP 4 344 203 A2**
(43) Date de publication de la demande: **27.03.2024**
(21) Numéro de dépôt: 24156441.8
(22) Date de dépôt: 28.06.2018
(51) Int. Cl.: H04N 19/597

(54) **PROCÉDÉ DE CODAGE ET DÉCODAGE D'IMAGES, DISPOSITIF DE CODAGE ET DÉCODAGE ET PROGRAMMES D ORDINATEUR CORRESPONDANTS**

(30) Priorité: 05.07.2017 FR 1756316
(62) Demande divisionnaire de: 18752539.9
(71) Demandeur: Orange, 92130 Issy-les-Moulineaux (FR)
(72) Inventeur: HENRY, Félix, 92326 Chatillon (FR); JUNG, Joël, 92326 Chatillon (FR); RAY, Bappaditya, 92326 Chatillon (FR)

(57) **Abrégé**

L'invention concerne un procédé de codage d'une image (ICj) découpée en blocs, ladite image contenant deux zones (Z1, Z2) définies préalablement au codage de ladite image, lesdites zones étant distinctes,
ledit procédé de codage étant caractérisé en ce que l'image courante a été obtenue par projection d'une vidéo 360° et en ce qu'il met en oeuvre ce qui suit :
- coder (C6a)-C8a)) un bloc courant d'une (Zl) desdites zones, ledit codage comprenant :
- prédire le bloc courant en utilisant un bloc préalablement codé puis décodé, situé dans l'autre (Z2) desdites zones,
- coder (C100a)) une information (ibc_flag) qui indique si un mode de prédiction Intra Block Copy a été utilisé ou non pour prédire le bloc courant,
- décoder le bloc courant,

- mémoriser (C101b)) les données du bloc courant décodé en fonction de ladite information.

## Description

### Domaine de l'invention

La présente invention se rapporte de manière générale au domaine du traitement d'images, et plus précisément au codage et au décodage de paramètres d'images numériques, que ces images numériques soient fixes ou fassent partie d'une séquence d'images numériques.

Le codage/décodage de tels paramètres d'image s'applique notamment à des images issues d'au moins une séquence vidéo comprenant :
- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- des images obtenues par projection d'une vidéo 360°,
- etc...

La présente invention s'applique de manière similaire au codage/décodage de paramètres d'images de type 2D ou 3D.

L'invention peut notamment, mais non exclusivement, s'appliquer au codage vidéo mis en oeuvre dans les codeurs vidéo actuels AVC (abréviation anglaise de « Advanced Vidéo Coding ») et HEVC (abréviation anglaise de « High Efficiency Video Coding») et leurs extensions (MVC, 3D-AVC, MV-HEVC, 3D-HEVC, etc), et au décodage correspondant.

### Arrière-plan de l'invention

Les codeurs vidéo actuels (MPEG, H.264, HEVC, ...) utilisent une représentation par blocs de la séquence vidéo. Les images sont découpées en blocs, lesquels sont susceptibles d'être redécoupés, par exemple de façon récursive comme dans la norme HEVC.

Pour un bloc courant à coder, les paramètres d'image associés à ce bloc sont codés sous forme de bits à l'aide d'une méthode de codage adaptée mise en oeuvre par un codeur, tel que par exemple un codeur entropique dont le but est de coder ces paramètres sans perte.

De tels paramètres sont par exemple :
- les coefficients résiduels de prédiction des pixels du bloc courant,
- le mode de prédiction du bloc courant (prédiction Intra, prédiction Inter, prédiction par défaut réalisant une prédiction pour laquelle aucune information n'est transmise au décodeur (« en anglais « skip »)),
- des informations précisant le type de prédiction du bloc courant (orientation, image de référence, ...),
- le type de découpage du bloc courant,
- les informations de mouvement du bloc courant si nécessaire,
- etc.

Les bits obtenus après codage entropique sont inscrits dans un signal de données qui est destiné à être transmis au décodeur.

Une fois que le signal de données codées a été reçu par le décodeur, le décodage est fait image par image, et pour chaque image, bloc par bloc. Pour chaque bloc, les bits représentatifs des paramètres d'image associés au bloc sont lus, puis décodés à l'aide d'une méthode de décodage mise en oeuvre par un décodeur.

Pour chaque type ou format d'image considéré, un codage spécifique est implémenté. Ainsi par exemple, les codeurs/décodeurs AVC et HEVC sont adaptés pour coder/décoder des images 2D issues d'une même caméra et se succédant temporellement.

Un codage du type précité utilise généralement, pour une image courante considérée, une prédiction du bloc courant.

Il existe différents modes de prédiction, tels que par exemple:
- le mode de prédiction Intra qui consiste à prédire les pixels du bloc courant par rapport à des pixels voisins de ceux du bloc courant, ces pixels voisins ayant déjà été codés puis décodés et pouvant être situés dans différentes directions prédéterminées, par exemple trente-cinq dans le standard HEVC,
- le mode de prédiction Inter qui consiste à prédire certaines informations de codage associées au bloc courant, telles que par exemple :
   - le vecteur de mouvement temporel du bloc courant par rapport à un vecteur de mouvement temporel associé à un bloc de pixels de référence,
   - les pixels du bloc courant par rapport aux pixels d'un bloc de pixels de référence pointé par le vecteur de mouvement temporel et situé dans une autre image que l'image courante à laquelle appartient le bloc courant.
- le mode de prédiction "Intra Block Copy" (IBC), tel que décrit dans le document : SIP(2015), vol.4, page 1 à 12, 2015, Industrial technology advances,"Overview of HEVC extensions on screen content coding" de Shan Liu, Xiaozhong Xu, Shawmin Lei et Kevin Jou, qui permet de prédire le bloc courant par un bloc appartenant à la même image, dans une partie précédemment codée et décodée de cette dernière.

Ces modes de prédiction sont mis en compétition et le mode de prédiction qui optimise un critère de performance de codage, tel que par exemple le critère débit-distorsion, est sélectionné pour la prédiction de chaque bloc de l'image courante.

Un inconvénient du codage prédictif précité est que la disponibilité du mode de prédiction IBC à l'encodeur comme au décodeur augmente les ressources en calculs. Par ailleurs, à l'encodeur, il est nécessaire de coder un élément de syntaxe spécifique au mode de prédiction IBC et de l'inscrire dans le signal à transmettre au décodeur, ce qui augmente le coût de signalisation. Enfin, le mode de prédiction IBC implique la mémorisation de toutes les données d'image à l'encodeur et au décodeur, de manière à pourvoir être utilisées pour le codage et le décodage du bloc courant.

L'invention vise donc un codeur/décodeur qui propose d'appliquer à un instant courant deux modes de prédiction différents à une image courante issue d'un contenu vidéo d'un type ou format donné, tout en permettant d'optimiser :
- les performances de codage/décodage de l'image courante,
- la complexité du codage/décodage de l'image courante,
- la réduction des ressources mémoire à l'encodeur et au décodeur.

### Objet et résumé de l'invention

Un des buts de l'invention est de remédier à des inconvénients de l'état de la technique précité.

A cet effet, un objet de la présente invention concerne un procédé de codage d'une image découpée en blocs, tel que défini dans la revendication 1.

Une telle disposition permet de réduire la complexité du codage puisque un mode de prédiction particulier n'est pas utilisé pour l'autre zone de l'image et ne sera donc pas mis en compétition par rapport à d'autres modes de prédiction lors du codage d'un bloc situé dans l'autre zone.

Une telle disposition permet en outre de réduire les coûts de mémorisation des données de codage, puisque les données des blocs codés puis décodés de l'image ne sont mémorisées que pour une des deux zones de l'image.

Selon un mode de réalisation particulier, le procédé de codage comprend le codage d'au moins une information de localisation du bloc préalablement codé puis décodé. Une telle information de localisation peut être un vecteur de mouvement ou un ensemble de coordonnées.

Ladite information de localisation ainsi codée est transmise au décodeur, ce qui lui permet, lors du décodage d'un bloc courant appartenant à l'une des zones de l'image courante, de localiser le bloc décodé situé dans l'autre zone de l'image courante.

Selon un mode de réalisation particulier, est mis en oeuvre le codage d'une information d'identification de chacune des deux zones de l'image.

Une telle disposition permet de transmettre au décodeur la position de chacune des zones l'une par rapport à l'autre.

Corrélativement, l'invention concerne un dispositif de codage d'une image découpée en blocs, tel que défini dans la revendication 4.

De façon correspondante, l'invention concerne aussi un procédé de décodage d'un signal de données représentatif d'une image découpée en blocs qui a été codée, tel que défini dans la revendication 7.

Selon un mode de réalisation particulier, le procédé de décodage comprend la lecture, dans le signal de données, d'au moins une information de localisation du bloc préalablement codé puis décodé.

Selon un mode de réalisation particulier, chacune des zones de l'image est identifiée par lecture d'une information d'identification correspondante lue dans le signal de données.

Corrélativement, l'invention concerne un dispositif de décodage d'un signal de données représentatif d'une image découpée en blocs qui a été codée, tel que défini dans la revendication 10.

L'invention concerne encore un programme d'ordinateur comportant des instructions pour mettre en oeuvre l'un des procédés de codage et de décodage selon l'invention, lorsqu'il est exécuté sur un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, un moyen d'enregistrement numérique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

### Brève description des dessins

D'autres caractéristiques et avantages apparaîtront à la lecture de modes de réalisation préférés décrits en référence aux figures dans lesquelles:
- la figure 1 représente le déroulement du procédé de codage selon un mode de réalisation de l'invention,
- la figure 2 représente un dispositif de codage selon un mode de réalisation de l'invention,
- les figures 3A à 3C représentent chacune des exemples de zones distinctes dans l'image courante,
- la figure 4 représente le déroulement du procédé de décodage selon un mode de réalisation de l'invention,
- la figure 5 représente un dispositif de décodage selon un mode de réalisation de l'invention.

### Description détaillée de la partie codage

Un mode de réalisation de l'invention va maintenant être décrit, dans lequel le procédé de codage selon l'invention est utilisé pour coder une image ou une séquence d'images selon un flux binaire proche de celui qu'on obtient par un codage mis en oeuvre dans un codeur conforme à l'une quelconque des normes de codage vidéo actuelles ou à venir.

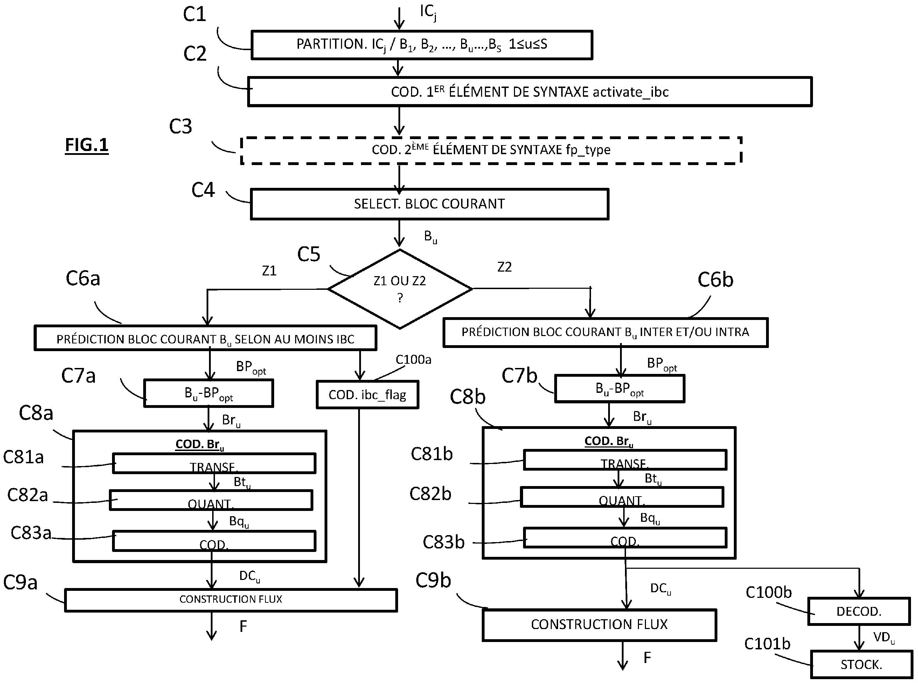

Dans ce mode de réalisation, le procédé de codage selon l'invention est par exemple implémenté de manière logicielle ou matérielle par modifications d'un tel codeur. Le procédé de codage selon l'invention est représenté sous la forme d'un algorithme comportant des opérations C1 à C100a) ou C1 à C101b) telles que représentées à la figure 1.

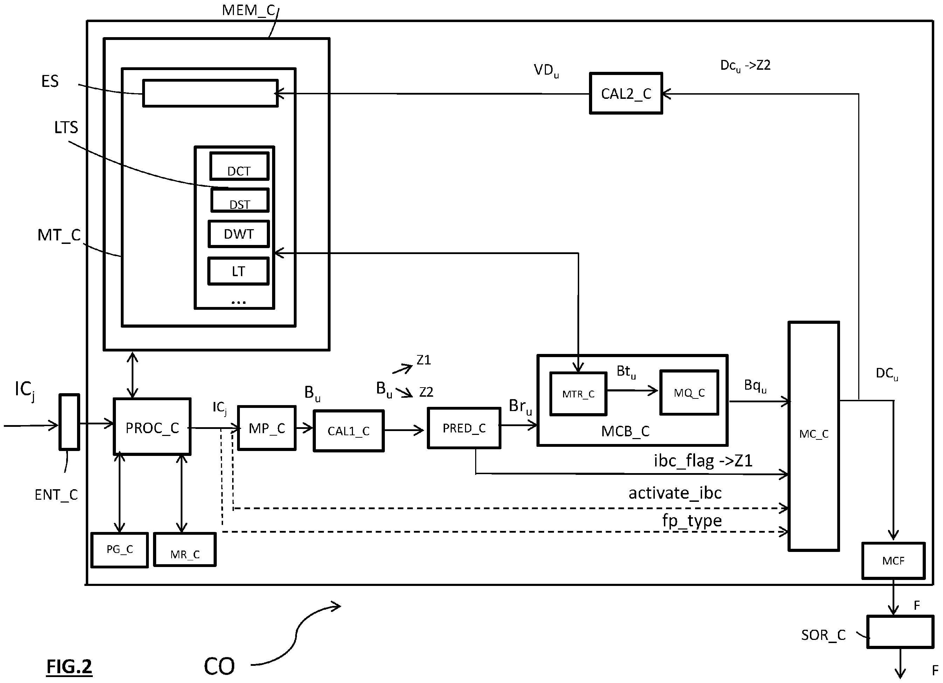

Selon le mode de réalisation de l'invention, le procédé de codage selon l'invention est implémenté dans un dispositif de codage ou codeur CO représenté à la figure 2.

Comme illustré en figure 2, le codeur CO comprend une mémoire MEM_C comprenant une mémoire tampon MT_C, un processeur PROC_C piloté par un programme d'ordinateur PG_C qui met en oeuvre le procédé de codage selon l'invention. A l'initialisation, les instructions de code du programme d'ordinateur PG_C sont par exemple chargées dans une mémoire RAM, notée MR_C, avant d'être exécutées par le processeur PROC_C.

Le procédé de codage représenté sur la figure 1 s'applique à toute image courante ICⱼ fixe ou bien faisant partie d'une séquence de L images IC₁, ..., ICⱼ,..., IC_{L} (1≤j≤L) à coder.

L'image courante ICⱼ est issue d'au moins une séquence vidéo comprenant, à titre d'exemples non exhaustifs :
- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes, c'est-à-dire représentatives d'une même scène (codage/décodage de type 3D),
- des images obtenues par projection d'une vidéo 360°,
- des images obtenues par projection d'une vidéo stéréo et comportant chacune deux vues représentatives d'une même scène, qui sont destinées à être regardées respectivement par l'œil gauche et l'œil droit de l'utilisateur,
- des images non naturelles du type « screen Content », telles que par exemple des images obtenues par capture vidéo d'écran,
- etc...

En référence à la figure 1, il est procédé en C1, de façon connue en soi, au découpage d'une image courante ICⱼ en une pluralité de blocs B₁, B₂, ..., Bᵤ,..., Bs (1≤u≤S). Le partitionnement est mis en oeuvre par un dispositif de partitionnement MP_C représenté sur la figure 2, lequel dispositif est piloté par le processeur PROC_C.

Il convient de noter qu'au sens de l'invention, le terme « bloc » signifie unité de codage (de l'anglais « coding unit »). Cette dernière terminologie est notamment utilisée dans la norme HEVC « ISO/IEC/23008-2 Recommandation ITU-T H.265 High Efficiency Video Coding (HEVC) ».

En particulier, une telle unité de codage regroupe des ensembles de pixels de forme rectangulaire ou carrée, encore appelés blocs, macroblocs, ou bien des ensembles de pixels présentant d'autres formes géométriques.

Lesdits blocs B₁, B₂, ..., Bᵤ,..., Bs sont destinés à être codés selon un ordre de parcours prédéterminé, qui est par exemple du type lexicographique. Cela signifie que les blocs sont codés les uns après les autres, de la gauche vers la droite.

D'autres types de parcours sont bien sûr possibles. Ainsi, il est possible de découper l'image ICⱼ en plusieurs sous-images appelées slices et d'appliquer indépendamment un découpage de ce type sur chaque sous-image. Il est également possible de coder non pas une succession de lignes, comme expliqué ci-dessus, mais une succession de colonnes. Il est également possible de parcourir les lignes ou colonnes dans un sens ou dans l'autre.

Selon un exemple, les blocs B₁, B₂, ..., Bᵤ,..., Bs ont une forme carrée et contiennent tous K pixels, avec K≥1. A titre d'exemple non exhaustif, les blocs ont une taille de 64x64 pixels et/ou 32x32 et/ou 16x16 et/ou 8x8 pixels.

En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

En C2, il est procédé au codage d'un premier élément de syntaxe activate_ibc qui est associé à une caractéristique de l'image courante ICⱼ.

L'élément de syntaxe activate_ibc est un élément de syntaxe haut niveau d'une séquence vidéo comprenant l'image courante ICⱼ. A cet effet, en fonction du contexte de codage, cet élément peut être codé :
- au début du codage de chaque image de la séquence vidéo,
- ou une seule fois au début du codage d'une séquence d'images,
- ou une seule fois au début du codage de la séquence vidéo.

L'élément de syntaxe activate_ibc est destiné à indiquer si, pour le bloc courant à coder, est mis en compétition avec d'autres modes de prédiction prédéterminés, un mode de prédiction du type « Intra Block Copy » mentionné plus haut dans la description, selon lequel le bloc courant, situé dans une première zone de l'image courante, est prédit par rapport à un bloc préalablement codé puis décodé, situé dans une deuxième zone de l'image courante, les blocs de la deuxième zone ayant été préalablement codés puis décodés. Selon l'invention, les première et deuxième zones sont distinctes, en ce sens qu'elles ne se chevauchent pas.

Le codage C2 est par exemple un codage entropique de type CABAC ("Context Adaptive Binary Arithmetic Coder" en anglais) ou bien encore un codage entropique de type arithmétique ou de Huffman. Ce codage est mis en oeuvre par un dispositif de codage MC_C représenté sur la figure 2, lequel dispositif est piloté par le processeur PROC_C.

Selon un mode de réalisation préféré, l'élément de syntaxe activate_ibc prend la valeur 0 si le mode de prédiction du type « Intra Block Copy » n'est pas mis en compétition et la valeur 1 si le mode de prédiction du type « Intra Block Copy » est mis en compétition.

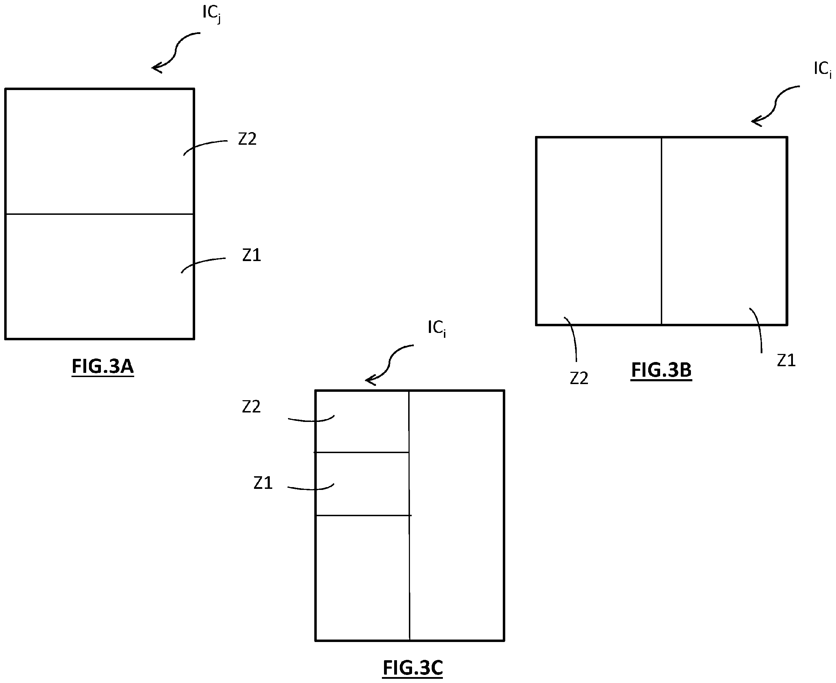

Selon un premier mode de réalisation représenté à la figure 3A, une image courante ICⱼ comprend une première zone Z1 qui s'étend sur la moitié basse de l'image et une deuxième zone Z2 qui s'étend sur la moitié haute de l'image.

Selon un deuxième mode de réalisation représenté à la figure 3B, une image courante ICⱼ comprend une première zone Z1 qui s'étend sur la moitié droite de l'image et une deuxième zone Z2 qui s'étend sur la moitié gauche de l'image.

Selon un troisième mode de réalisation représenté à la figure 3C, une image courante ICⱼ comprend une première zone Z1 qui s'étend sur le quart gauche bas de l'image et une deuxième zone Z2 qui s'étend sur le quart gauche haut de l'image.

D'autres configurations sont bien entendu possibles. Par exemple, les zones Z1 et Z2 peuvent être interverties. En outre les zones Z1 et Z2 peuvent avoir la même forme ou non.

De façon optionnelle, comme représenté en pointillé sur la figure 1, il est procédé, en C3, au codage d'un deuxième élément de syntaxe fp_type qui est associé à une autre caractéristique de l'image courante ICⱼ.

L'élément de syntaxe fp_type est également un élément de syntaxe haut niveau d'une séquence vidéo comprenant l'image courante ICⱼ. A cet effet, en fonction du contexte de codage, cet élément peut être codé :
- au début du codage de chaque image de la séquence vidéo,
- ou une seule fois au début du codage d'une séquence d'images,
- ou une seule fois au début du codage de la séquence vidéo.

L'élément de syntaxe fp_type est destiné à indiquer si l'image courante est composée de plusieurs vues capturées au même instant temporel et agencées dans l'image courante de façon à former une unique vue (rectangle de pixels). Un procédé de composition d'une telle image utilise par exemple la technique appelée « Frame Packing » (FP).

Le codage C3 est par exemple un codage entropique de type CABAC ou bien encore un codage entropique de type arithmétique ou de Huffman. Ce codage est mis en oeuvre par le dispositif de codage MC_C de la figure 2.

Selon un mode de réalisation préféré, l'élément de syntaxe fp_type prend par exemple :
- la valeur 01 pour indiquer que les zones Z1 et Z2 sont agencées comme représenté à la figure 3A,
- la valeur 10 pour indiquer que les zones Z1 et Z2 sont agencées comme représenté à la figure 3B,
- la valeur 11 pour indiquer que les zones Z1 et Z2 sont agencées comme représenté à la figure 3C.

En référence à la figure 1, le codeur CO de la figure 2 sélectionne en C4 un bloc courant à coder Bᵤ de l'image ICⱼ.

En C5, il est procédé à la localisation du bloc courant Bᵤ de l'image ICⱼ par exemple par détermination de ses coordonnées par rapport au premier pixel situé en haut à gauche de l'image ICⱼ, et qui a pour coordonnées (0,0).

La localisation C5 est mise en oeuvre par un dispositif de calcul CAL1_C tel que représenté à la figure 2, lequel dispositif est piloté par le processeur PROC_C.

Si le bloc courant Bᵤ appartient à la première zone Z1 de l'image ICⱼ et si le premier élément de syntaxe activate_ibc a pour valeur 1, il est procédé en C6a) à la prédiction du bloc courant Bᵤ par la technique de prédiction du type « Intra Block Copy », ainsi que par des techniques de prédiction classiques, par exemple Intra et/ou Inter. A cet effet, le bloc Bᵤ est prédit par rapport à au moins un bloc prédicteur conformément à un mode de prédiction appartenant à l'une des techniques de prédiction qui viennent d'être mentionnées. Au cours de la prédiction C6a), au moins une information de localisation du bloc prédicteur est déterminée. Une telle information est par exemple, un vecteur de mouvement qui pointe sur le bloc prédicteur, les coordonnées du premier pixel en haut à gauche du bloc prédicteur, etc....

De façon connue en soi, le bloc courant Bᵤ est prédit par rapport à une pluralité de blocs prédicteurs candidats. Chacun des blocs prédicteurs candidats est un bloc de pixels qui a été déjà codé puis décodé.

Ainsi, dans le cas de la technique de prédiction intra, le bloc courant Bᵤ est prédit par interpolation à partir de valeurs de pixels décodés de blocs prédicteurs candidats qui sont situés immédiatement à gauche ou au-dessus du bloc courant.

Dans le cas de la technique de prédiction inter, le bloc courant Bᵤ est prédit par interpolation à partir de valeurs de pixels décodées de blocs prédicteurs candidats qui sont situés dans une ou plusieurs images précédemment traitées et mémorisées.

Conformément à l'invention, dans le cas de la technique de prédiction « Intra Block Copy », le bloc courant Bᵤ est prédit par interpolation à partir de valeurs de pixels décodées de blocs prédicteurs candidats qui sont situés dans la deuxième zone Z2 de l'image courante ICⱼ.

A l'issue de l'étape C6a) de prédiction, un bloc prédicteur optimal BPₒₚₜ est obtenu suite à une mise en compétition desdits techniques de prédiction prédéterminés, selon un critère de performance de codage prédéterminé, par exemple par minimisation d'un critère débit distorsion bien connu de l'homme du métier. Le bloc BPₒₚₜ est considéré comme une approximation du bloc courant Bᵤ. Les informations relatives à cette prédiction sont destinées à être inscrites, sous forme d'éléments de syntaxe, dans un signal ou flux de données à transmettre à un décodeur.

Conformément à l'invention :
- dans le cas où le bloc BPₒₚₜ a été obtenu par prédiction « Intra Block Copy », il est procédé en C100a) au codage d'un élément de syntaxe ibc_flag par le dispositif de codage MC_C de la figure 2. L'élément de syntaxe ibc_flag est par exemple codé à la valeur 1. D'autres éléments de syntaxe indiquent la localisation du bloc prédicteur BPₒₚₜ mémorisé dans la deuxième zone Z2 de l'image courante ICⱼ : il s'agit par exemple d'un vecteur de mouvement qui pointe sur le bloc prédicteur BPₒₚₜ, les coordonnées du premier pixel en haut à gauche du bloc prédicteur BPₒₚₜ, etc...;
- dans le cas où le bloc BPₒₚₜ n'a pas été obtenu par prédiction « Intra Block Copy », l'élément de syntaxe ibc_flag est par ailleurs codé à la valeur 0.

Il est ensuite procédé en C7a) à la comparaison des données relatives au bloc courant Bᵤ aux données du bloc prédicteur BPₒₚₜ. Une telle comparaison consiste à calculer la différence entre le bloc prédicteur obtenu BPₒₚₜ et le bloc courant Bᵤ.

Un ensemble de données, appelé bloc résidu Brᵤ, est alors obtenu.

Les opérations C6a) et C7a) sont mises en oeuvre par un dispositif de codage prédictif PRED_C représenté sur la figure 2, lequel dispositif est piloté par le processeur PROC_C.

En référence à nouveau à la figure 1, les données du bloc résidu courant Brᵤ sont codées en C8a).

Selon un exemple de réalisation non limitatif, un tel codage C8a) met en oeuvre l'application C81a) d'une transformée aux pixels du bloc résidu courant Brᵤ.

De façon connue en soi, en fonction du contexte ou de la norme de codage utilisée, une telle transformée est par exemple une transformée de type DCT (abréviation anglaise de « Discrete Cosine Transform »), DST (abréviation anglaise de « Discrete Sine Transform »), de type DWT (abréviation anglaise de « Discrete Wavelet Transform ») ou encore de type LT (abréviation anglaise de « Lapped Transform »). Ces transformées sont stockées préalablement dans une liste LTS, dans la mémoire tampon MT_C du codeur CO de la figure 2.

A l'issue de l'application de cette transformée, un bloc de données transformé courant Btᵤ est obtenu.

Une telle opération est effectuée par un dispositif MTR_C de calcul de transformée, tel que représenté figure 2, lequel dispositif est piloté par le processeur PROC_C.

Le codage C8a) met en oeuvre en outre une quantification C82a) des données du bloc transformé Btᵤ selon une opération classique de quantification, telle que par exemple une quantification scalaire ou vectorielle. Un bloc Bqᵤ de coefficients quantifiés est alors obtenu.

La quantification C82a) est mise en oeuvre par un dispositif de quantification MQ_C tel que représenté à la figure 2, lequel dispositif est piloté par le processeur PROC_C.

Le dispositif MTR_C de calcul de transformée et le dispositif de quantification MQ_C sont contenus dans un dispositif de codage de blocs MCB_C représenté sur la figure 2, lequel dispositif est piloté par le processeur PROC_C.

Le codage C8a) met en oeuvre en outre un codage C83a) des données du bloc Bqᵤ de coefficients quantifiés. Le codage C83a) est mis en oeuvre par le dispositif de codage MC_C de la figure 2. A l'issue du codage C83a) est obtenu un ensemble de données codées DCᵤ du bloc courant Bᵤ.

En référence à la figure 1, il est procédé en C9a) à la construction d'une portion d'un signal de données F, ladite portion contenant en particulier selon l'invention :
- les données codées DCᵤ obtenues en C8a),
- la valeur 0/1 de l'élément de syntaxe ibc_flag,
- éventuellement la valeur 0/1 du premier élément de syntaxe activate_ibc, si ce dernier est codé au niveau image,
- éventuellement la valeur 0/1 du deuxième élément de syntaxe fp_type, si ce dernier est codé au niveau image.

La construction de la portion de signal F est mise en oeuvre par un dispositif MCF de construction de signal de données, tel que représenté sur la figure 2.

Si à l'issue de la localisation C5, le bloc courant Bᵤ appartient à la deuxième zone Z2 de l'image ICⱼ et si le premier élément de syntaxe activate_ibc a pour valeur 1, il est procédé en C6b) à la prédiction du bloc courant Bᵤ par des techniques classiques de prédiction, telles que par exemple Intra et/ou Inter. A cet effet, le bloc Bᵤ est prédit par rapport à au moins un bloc prédicteur conformément à un mode de prédiction appartenant à l'une des techniques de prédiction classiques qui viennent d'être mentionnées.

A l'issue de l'étape C6b) de prédiction, un bloc prédicteur optimal BPₒₚₜ est obtenu suite à une mise en compétition desdits techniques de prédiction classiques prédéterminées, selon un critère de performance de codage prédéterminé, par exemple par minimisation du critère débit distorsion. Le bloc BPₒₚₜ est considéré comme une approximation du bloc courant Bᵤ. Les informations relatives à cette prédiction sont destinées à être inscrites, sous forme d'éléments de syntaxe, dans un signal ou flux de données à transmettre à un décodeur.

En C7b) est mis en oeuvre classiquement un calcul de la différence entre le bloc prédicteur obtenu BPₒₚₜ et le bloc courant Bᵤ.

Un ensemble de données, appelé bloc résidu Brᵤ, est alors obtenu.

Un codage C8b) du bloc résidu Brᵤ est mis en oeuvre et comprend des opérations C81b), C82b) et C83b) qui sont respectivement identiques aux opérations C81a), C82a) et C83a) précitées et qui pour cette raison, ne sont pas à nouveau décrites ici.

A l'issue du codage C83b) est obtenu un ensemble de données codées DCᵤ du bloc courant Bᵤ.

En référence à la figure 1, il est procédé en C9b) à la construction d'une portion du signal de données F, ladite portion contenant les données codées DCᵤ obtenues en C8b) et des informations relatives à la prédiction du bloc courant utilisé. Il est à noter que la portion du signal F ne contient pas la valeur 0 ou 1 de l'élément de syntaxe ibc_flag, la prédiction « Intra Block Copy » n'ayant pas été mise en compétition lors du codage du bloc courant de la deuxième zone Z2. Le flux F contient :
- éventuellement la valeur 0/1 du premier élément de syntaxe activate_ibc, si ce dernier est codé au niveau image,
- éventuellement la valeur 0/1 du deuxième élément de syntaxe fp_type, si ce dernier est codé au niveau image

Conformément à l'invention, si premier élément de syntaxe activate_ibc est à la valeur 1, il est procédé en C100b) au calcul d'une version décodée BDᵤ du bloc courant Bᵤ à partir de l'ensemble de données codées DCᵤ obtenu à l'issue du codage C8b). Une telle version décodée correspond au bloc décodé obtenu à l'issue du procédé de décodage de l'image ICⱼ qui sera décrit plus loin dans la description.

Le calcul C100b) est mis en oeuvre par un dispositif de calcul CAL2_C tel que représenté à la figure 2, lequel dispositif est piloté par le processeur PROC_C.

La version décodée BDᵤ du bloc courant Bᵤ est stockée en C101b) dans un espace ES de la mémoire tampon MT_C du codeur CO de la figure 2 afin d'être utilisée par le codeur CO pour prédire les blocs suivants de l'image courante ICⱼ ou d'une autre image.

Le calcul C100b) et le stockage C101b) sont mis en oeuvre soit avant la construction C9b) de la portion de signal F, soit après.

De façon connue en soi, quelle que soit la construction C9a) ou C9b) de portion de signal F mise en oeuvre, la portion de signal F peut comprendre en outre certaines informations encodées par le codeur CO, telles que par exemple :
- le type de prédiction Inter et/ou Intra si le bloc courant Bᵤ a été prédit en inter et/ou en intra, et le cas échéant, le mode de prédiction sélectionné, l'indice du bloc prédicteur obtenu,
- le type de partitionnement du bloc courant Bᵤ si ce dernier a été partitionné,
- le type de transformée appliquée aux données du bloc courant BU,
- etc....

Le signal de données F est ensuite transmis par un réseau de communication (non représenté) à un terminal distant. Celui-ci comporte le décodeur DO représenté à la figure 7.

Les opérations de codage C1 à C100a) ou bien C1 à C101b) qui viennent d'être décrites ci-dessus sont ensuite mises en oeuvre pour chacun des blocs B₁, B₂, ..., Bᵤ,..., Bs à coder de l'image courante ICⱼ considérée, de façon différentiée selon que le bloc courant est situé dans la première zone Z1 ou la deuxième zone Z2 de l'image courante ICⱼ.

### Description détaillée de la partie décodage

Un mode de réalisation de l'invention va maintenant être décrit, dans lequel le procédé de décodage selon l'invention est utilisé pour décoder un signal ou flux de données représentatif d'une image ou d'une séquence d'images qui est apte à être décodé par un décodeur conforme à l'une quelconque des normes de décodage vidéo actuelles ou à venir.

Dans ce mode de réalisation, le procédé de décodage selon l'invention est par exemple implémenté de manière logicielle ou matérielle par modifications d'un tel décodeur.

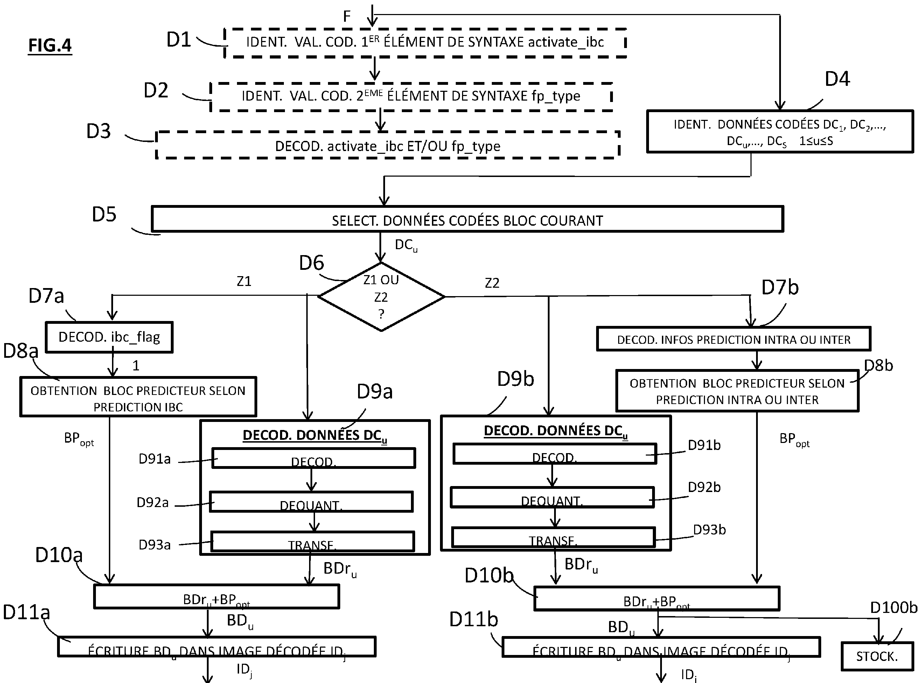

Le procédé de décodage selon l'invention est représenté sous la forme d'un algorithme comportant des opérations D1 à D11a) ou D1 à D100b) telles que représentées à la figure 4.

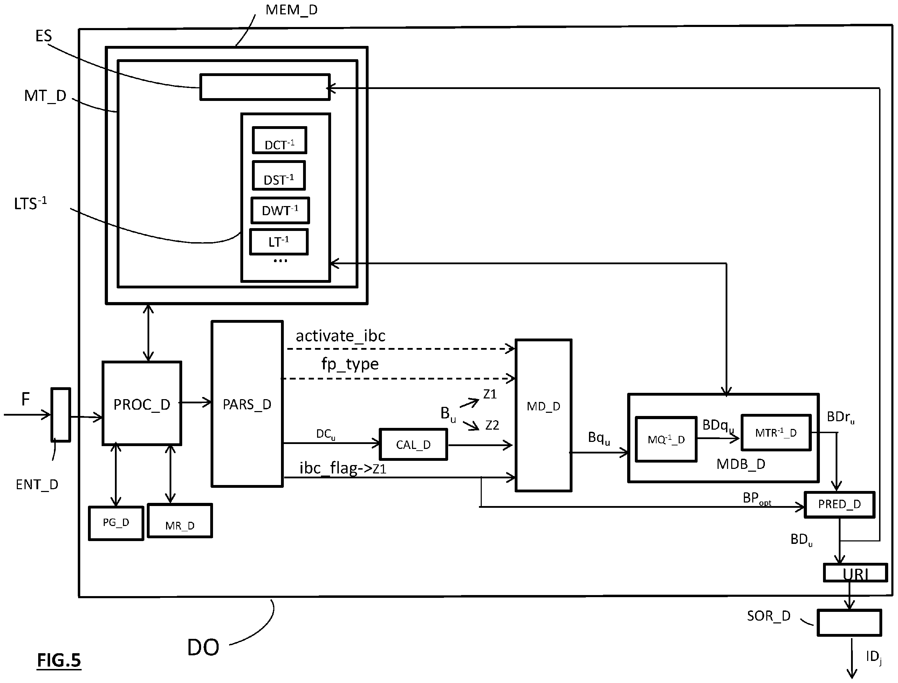

Selon ce mode de réalisation, le procédé de décodage selon l'invention est implémenté dans un dispositif de décodage ou décodeur DO représenté à la figure 5.

Comme illustré en figure 5, selon ce mode de réalisation de l'invention, le décodeur DO comprend une mémoire MEM_D qui comprend elle-même une mémoire tampon MT_D, un processeur PROC_D piloté par un programme d'ordinateur PG_D qui met en oeuvre le procédé de décodage selon l'invention. A l'initialisation, les instructions de code du programme d'ordinateur PG_D sont par exemple chargées dans une mémoire RAM notée RAM_D, avant d'être exécutées par le processeur PROC_D.

Le procédé de décodage représenté sur la figure 4 s'applique à toute image courante ICⱼ codée fixe ou bien faisant partie d'une séquence de L images IC₁, ..., ICⱼ,..., IC_{L} (1≤j≤L) à décoder.

L'image courante ICⱼ à décoder est issue d'au moins une séquence vidéo comprenant, à titre d'exemples non exhaustifs :
- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes, c'est-à-dire représentatives d'une même scène (codage/décodage de type 3D),
- des images obtenues par projection d'une vidéo 360°,
- des images obtenues par projection d'une vidéo stéréo et comportant chacune deux vues représentatives d'une même scène, qui sont destinées à être regardées respectivement par l'œil gauche et l'œil droit de l'utilisateur,
- des images non naturelles du type « screen Content », telles que par exemple des images obtenues par capture vidéo d'écran,
- etc...

En D1, il est procédé à la lecture, dans le signal de données F de la valeur codée 0 ou 1 du premier élément de syntaxe activate_ibc qui est associé à une caractéristique de l'image courante ICⱼ à décoder, dans le cas où cet élément de syntaxe a été codé au niveau de l'image courante ICⱼ. Comme l'identification D1 est optionnelle, elle est représentée en pointillé sur la figure 4.

En D2, il est procédé à la lecture, dans le signal de données F, de la valeur codée 0 ou 1 du deuxième élément de syntaxe fp_type qui est associé à une caractéristique de l'image courante ICⱼ à décoder, dans le cas où cet élément de syntaxe a été codé au niveau de l'image courante ICⱼ. Comme l'identification D2 est optionnelle, elle est représentée en pointillé sur la figure 4.

Selon un mode de réalisation préféré, l'élément de syntaxe fp_type qui est lu prend par exemple :
- la valeur 01 pour indiquer que les zones Z1 et Z2 sont agencées comme représenté à la figure 3A,
- la valeur 10 pour indiquer que les zones Z1 et Z2 sont agencées comme représenté à la figure 3B,
- la valeur 11 pour indiquer que les zones Z1 et Z2 sont agencées comme représenté à la figure 3C.

Les identifications D1 et D2 sont mises en oeuvre par un dispositif PARS_D d'analyse de flux, tel que représenté à la figure 5, ledit dispositif étant piloté par le processeur PROC_D.

En cas d'identification, en D3, la valeur codée 0 ou1 prise par le premier élément de syntaxe activate_ibc et/ou l'une des valeurs 01, 10, 11 prise par le deuxième élément de syntaxe fp_type sont décodées.

Un tel décodage D3 est mis en oeuvre par un dispositif de décodage MD_D représenté sur la figure 5, lequel dispositif est piloté par le processeur PROC_D.

Le décodage est par exemple un décodage entropique de type CABAC ou bien encore un décodage entropique de type arithmétique ou de Huffman.

En référence à la figure 4, il est procédé en D4 à l'identification, dans le signal F, des données codées DC₁, DC₂,..., DCᵤ, ..., DCs (1≤u≤S) associées respectivement aux blocs B₁, B₂, ..., Bᵤ,..., Bs codés précédemment conformément à l'ordre lexicographique précité, qui ont été obtenues à l'issue de l'opération de codage C8a) ou C8b) de la figure 1. Cela signifie que les blocs sont décodés les uns après les autres, de la gauche vers la droite, de façon correspondant à l'ordre de codage mentionné plus haut.

Une telle identification D4 est mise en oeuvre par le dispositif PARS_D d'analyse de flux de la figure 4.

D'autres types de parcours que celui qui vient d'être décrit ci-dessus sont bien sûr possibles et dépendent de l'ordre de parcours choisi au codage.

Selon un exemple, les blocs B₁, B₂, ..., Bᵤ,..., Bs ont une forme carrée et contiennent tous K pixels, avec K≥1. A titre d'exemple non exhaustif, les blocs ont une taille de 64x64 pixels et/ou 32x32 et/ou 16x16 et/ou 8x8 pixels.

En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

En référence à la figure 4, en D5, le décodeur DO de la figure 5 sélectionne comme bloc courant à décoder un ensemble de données codées courant DCᵤ de l'image ICⱼ, associé à un bloc Bᵤ à décoder.

En D6, il est procédé à la localisation du bloc courant Bᵤ à décoder de l'image ICⱼ par exemple par détermination de ses coordonnées par rapport au premier pixel reconstruit de l'image ICⱼ, situé en haut à gauche de cette dernière et qui a pour coordonnées (0,0).

La localisation D6 est mise en oeuvre par un dispositif de calcul CAL_D tel que représenté à la figure 5, lequel dispositif est piloté par le processeur PROC_D.

Si le bloc courant Bᵤ appartient à la première zone Z1 de l'image ICⱼ, et si le premier élément de syntaxe activate_ibc décodé en D1 a pour valeur 1, il est procédé en D7a) à la lecture, dans le signal de données F, de l'élément de syntaxe ibc_flag, au moyen du dispositif PARS_D d'analyse de flux de la figure 5, et de son décodage, au moyen du dispositif de décodage MD_D.

Selon l'invention, si le premier élément de syntaxe activate_ibc décodé en D1 ou bien précédemment a pour valeur 1, il est procédé en D6a) à la lecture dans le signal de données F de l'élément de syntaxe ibc_flag, au moyen du dispositif PARS_D d'analyse de flux de la figure 5, et de son décodage, au moyen du dispositif de décodage MD_D.

Conformément à l'invention :
- si l'élément de syntaxe ibc_flag a pour valeur 1, il est mis en oeuvre en D8a) une détermination du bloc prédicteur BPₒₚₜ servant à la prédiction du type « Intra Bloc Copy » au bloc Bᵤ à décoder, la localisation du bloc prédicteur BPₒₚₜ mémorisé dans la deuxième zone de l'image ICⱼ étant identifiée par des éléments de syntaxe qui sont décodés dans le signal de données F : de tels éléments de syntaxe sont par exemple un vecteur de mouvement qui pointe sur le bloc prédicteur BPₒₚₜ, les coordonnées du premier pixel en haut à gauche du bloc prédicteur BPₒₚₜ, etc... ;
- si l'élément de syntaxe ibc_flag a pour valeur 0, il est mis en oeuvre en D8a) une détermination du bloc prédicteur BPₒₚₜ servant à la prédiction du bloc courant Bᵤ qui est différente de la prédiction du type « Intra Bloc Copy ». Il peut s'agir par exemple d'une prédiction classique intra ou inter à l'issue de laquelle est obtenu un bloc prédicteur BPₒₚₜ associé à un indicateur préalablement lu dans le signal de données F.

En référence à la figure 4, les données codées DCᵤ du bloc courant Bᵤ sont décodées en D9a). Un tel décodage est mis en oeuvre par un dispositif de décodage de blocs MDB_D représenté sur la figure 5, lequel dispositif est piloté par le processeur PROC_D.

Le décodage D9a) met en oeuvre, en D91a), un décodage des données DCᵤ associées au bloc courant Bᵤ à décoder et qui ont été codées en C8a) sur la figure 1. A l'issue d'un tel décodage, est obtenu un ensemble d'informations numériques associées au bloc de coefficients quantifiés Bqᵤ qui a été obtenu en C82a) sur la figure 1.

Le décodage D91a) est mis en oeuvre par le dispositif de décodage MD_D représenté sur la figure 5.

Le décodage D9a) met en oeuvre en outre une déquantification D92a) du bloc de coefficients quantifiés Bqᵤ, selon une opération classique de déquantification qui est l'opération inverse de la quantification C82a) de la figure 1. Un ensemble de coefficients déquantifiés courant BDqᵤ est alors obtenu. Une telle déquantification est par exemple de type scalaire ou vectorielle et est mise en oeuvre au moyen d'un dispositif MQ⁻¹_D de quantification inverse, tel que représenté à la figure 1, lequel dispositif est piloté par le processeur PROC_D.

Le décodage D9a) met en oeuvre en outre l'application D93a) d'une transformée à l'ensemble de coefficients déquantifiés BDqᵤ courant obtenu en D92a). De façon connue en soi, une telle transformée est une transformée inverse de celle appliquée au codage en C81a) sur la figure 1, telle que par exemple une transformée DCT, DST, DWT, LT ou autres. De façon correspondante au codeur CO de la figure 2, ces transformées font partie d'une liste de transformées LTS⁻¹ qui est stockée préalablement dans la mémoire tampon MT_D du décodeur DO de la figure 5. Le type de transformée à appliquer peut être déterminé au décodeur classiquement, par lecture, dans le signal de données F, de l'index de la transformée appliquée au codage.

L'application de transformée D93a) est effectuée par un dispositif MTR⁻¹_D de calcul de transformée, tel que représenté à la figure 5, lequel dispositif est piloté par le processeur PROC_D.

Le dispositif MQ⁻¹_D de quantification inverse et le dispositif MTR⁻¹_D de calcul de transformée sont contenus dans un dispositif de décodage de blocs MDB_D représenté sur la figure 5, lequel dispositif est piloté par le processeur PROC_D.

A l'issue du décodage D9a) des données du bloc courant, est obtenu un bloc résidu décodé courant BDrᵤ.

En référence à la figure 4, en D10a), le bloc résidu décodé courant BDrᵤ est ajouté au bloc prédicteur BPₒₚₜ localisé en D6a).

L'opération D10a) est mise en oeuvre par un dispositif de décodage prédictif PRED_D représenté sur la figure 5, lequel dispositif est piloté par le processeur PROC_D.

En référence à la figure 4, il est procédé en D11a) à l'écriture du bloc décodé courant BDᵤ dans une image décodée IDⱼ.

L'écriture D11a) est mise en oeuvre par un dispositif URI de reconstruction d'image tel que représenté sur la figure 5, le dispositif URI étant piloté par le processeur PROC_D.

A l'issue de la localisation D6 de la figure 4, si le bloc courant Bᵤ à décoder appartient à la deuxième zone Z2 de l'image ICⱼ, il est procédé en D7b) :
- à la lecture dans le signal de données F, au moyen du dispositif PARS_D d'analyse de flux de la figure 5, d'informations relatives à la prédiction classique C6b) mise en oeuvre au codage,
- et du décodage de ces informations, au moyen du dispositif de décodage MD_D.

En référence à la figure 4, il est mis en oeuvre en D8b) une détermination du bloc prédicteur BPₒₚₜ servant à la prédiction du bloc courant Bᵤ qui est différente de la prédiction du type « Intra Bloc Copy ». Il peut s'agir par exemple d'une prédiction classique intra ou inter à l'issue de laquelle est obtenu un bloc prédicteur BPₒₚₜ associé aux informations lues en C6b) dans le signal de données F, puis décodées.

En référence à la figure 4, les données codées DCᵤ du bloc courant Bᵤ sont décodées en D9b) par le dispositif de décodage de blocs MDB_D de la figure 5.

Le décodage D9b) comprend des opérations D91b), D92b) et D93b) qui sont respectivement identiques aux opérations D91a), D92a) et D93a) précitées et, qui pour cette raison, ne sont pas à nouveau décrites ici.

A l'issue du décodage D9b) des données du bloc courant, est obtenu un bloc résidu décodé courant BDrᵤ.

En référence à la figure 4, en D10b), le dispositif de décodage prédictif PRED_D de la figure 5 ajoute le bloc résidu décodé courant BDrᵤ au bloc prédicteur BPₒₚₜ localisé en D6.

En référence à la figure 4, il est procédé en D11b) à l'écriture du bloc décodé courant BDᵤ dans une image décodée IDⱼ.

Conformément à l'invention, si premier élément de syntaxe activate_ibc est à la valeur 1, en référence à la figure 4, il est procédé en D100b) au stockage du bloc décodé courant BDᵤ dans un espace ES de la mémoire tampon MT_D du décodeur DO de la figure 5 afin d'être utilisé par le décodeur DO pour prédire les blocs suivants de l'image courante ICⱼ à décoder ou d'une autre image.

Le stockage D100b) est mis en oeuvre soit avant l'opération d'écriture D11b) du bloc décodé courant dans l'image décodée IDⱼ, soit après.

Le procédé de décodage qui vient d'être décrit ci-dessus est mis en oeuvre pour toutes les données codées de blocs DC₁, DC₂, ..., DCᵤ,..., DCs associées respectivement aux blocs B₁, B₂, ..., Bᵤ,..., Bs à décoder de l'image courante ICⱼ considérée et de façon différentiée selon que les données codées sont associées à un bloc situé dans la première zone ou la deuxième zone de l'image courante ICⱼ à décoder.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de codage d'une image (ICj) découpée en blocs, ladite image contenant deux zones (Z1, Z2) définies préalablement au codage de ladite image, lesdites zones étant distinctes,
ledit procédé de codage étant **caractérisé en ce que** l'image courante a été obtenue par projection d'une vidéo 360° et **en ce qu'**il met en oeuvre ce qui suit :
- coder (C6a)-C8a)) un bloc courant d'une (Z1) desdites zones, ledit codage comprenant :
- prédire le bloc courant en utilisant un bloc préalablement codé puis décodé, situé dans l'autre (Z2) desdites zones,
- coder (C100a)) une information (ibc_flag) qui indique si un mode de prédiction Intra Block Copy a été utilisé ou non pour prédire le bloc courant,
- décoder le bloc courant,
- mémoriser (C101b)) les données du bloc courant décodé en fonction de ladite information.

2. Procédé de codage selon la revendication 1, comprenant le codage d'au moins une information de localisation du bloc préalablement codé puis décodé.

3. Procédé de codage selon la revendication 1 ou la revendication 2, mettant en oeuvre le codage (C3) d'une information (fp_type) d'identification de chacune des deux zones de l'image.

4. Dispositif de codage (CO) d'une image (ICj) découpée en blocs, ladite image contenant deux zones (Z1, Z2) définies préalablement au codage de ladite image, lesdites zones étant distinctes, **caractérisé en ce que** l'image courante a été obtenue par projection d'une vidéo 360° et **en ce qu'**il comprend un circuit de traitement (CT_C) qui est agencé pour :
- coder un bloc courant d'une (Z1) desdites zones, ledit codage comprenant :
- prédire le bloc courant en utilisant un bloc préalablement codé puis décodé, situé dans l'autre (Z2) desdites zones,
- coder une information qui indique si un mode de prédiction Intra Block Copy a été utilisé ou non pour prédire le bloc courant,
- décoder le bloc courant,
- mémoriser les données du bloc courant décodé en fonction de ladite information.

5. Programme d'ordinateur comportant des instructions de code de programme pour l'exécution des étapes du procédé de codage selon l'une quelconque des revendications 1 à 3, lorsque ledit programme est exécuté sur un ordinateur.

6. Support d'enregistrement lisible par un ordinateur sur lequel est enregistré un programme d'ordinateur comprenant des instructions de code de programme pour l'exécution des étapes du procédé de codage selon l'une quelconque des revendications 1 à 3, lorsque ledit programme est exécuté par un ordinateur.

7. Procédé de décodage d'un signal de données (F) représentatif d'une image (ICⱼ) découpée en blocs qui a été codée, ladite au moins une image contenant deux zones définies préalablement au décodage de ladite image, lesdites zones étant distinctes,
ledit procédé de décodage étant **caractérisé en ce que** l'image courante a été obtenue par projection d'une vidéo 360° et **en ce qu'**il met en oeuvre, ce qui suit
- décoder un bloc courant d'une (Z1) desdites zones, ledit décodage comprenant :
- lire (D7a) dans le signal de données une information qui indique si un mode de prédiction Intra Block Copy est à utiliser ou pas pour prédire le bloc courant, le bloc courant étant destiné à être prédit en utilisant un bloc préalablement décodé, situé dans l'autre zone (Z2) de l'image,
- décoder (D8a)-D10a)) le bloc courant en utilisant une prédiction indiquée par ladite information lue,
- mémoriser (D100b)) les données du bloc courant décodé en fonction de ladite information lue.

8. procédé de décodage selon la revendication 7, comprenant la lecture, dans le signal de données, d'au moins une information de localisation du bloc préalablement codé puis décodé.

9. Procédé de décodage selon la revendication 7 ou la revendication 8, dans lequel chacune des zones de l'image est identifiée par lecture d'une information d'identification (fp_type) correspondante lue dans le signal de données.

10. Dispositif de décodage d'un signal de données (F) représentatif d'une image (ICj) découpée en blocs qui a été codée, ladite image contenant deux zones (Z1, Z2) définies préalablement au décodage de ladite image, lesdites zones étant distinctes, **caractérisé en ce que** l'image courante a été obtenue par projection d'une vidéo 360° et **en ce qu'**il comprend un circuit de traitement (CT_D) qui est agencé pour :
- décoder un bloc courant d'une (Z1) desdites zones, ledit décodage comprenant :
- lire dans le signal de données une information qui indique si un mode de prédiction Intra Block Copy est à utiliser ou pas pour prédire le bloc courant, le bloc courant étant destiné à être prédit en utilisant un bloc préalablement décodé, situé dans l'autre zone (Z2) de l'image,
- décoder le bloc courant en utilisant une prédiction indiquée par ladite information lue,
- mémoriser (D100b)) les données du bloc courant décodé en fonction de ladite information lue.

11. Programme d'ordinateur comportant des instructions de code de programme pour l'exécution des étapes du procédé de décodage selon l'une quelconque des revendications 7 à 9, lorsque ledit programme est exécuté sur un ordinateur.

12. Support d'enregistrement lisible par un ordinateur sur lequel est enregistré un programme d'ordinateur comprenant des instructions de code de programme pour l'exécution des étapes du procédé de décodage selon l'une quelconque des revendications 7 à 9, lorsque ledit programme est exécuté par un ordinateur.
